# EUROPEAN PATENT APPLICATION

(11) **EP 1 872 843 A1**
(43) Date of publication of application: **02.01.2008**
(21) Application number: 06116053.7
(22) Date of filing: 26.06.2006
(51) Int. Cl.: B01D 33/23

(54) **A filter frame for use in a disc filter**

(71) Applicant: Hydrotech Veolia Water Systems Aktiebolag, 235 32 Vellinge (SE)
(72) Inventor: Ralvert, Åke, 281 36, Hässleholm (SE)
(74) Representative: Henriksson, Dan Ragnar Mikael

(57) **Abstract**

In a disc filter according to the invention, use is made of replaceble filter segments 13 comprising a filter cloth frame 14 and a filter cloth 4.

## Description

### Field of the Invention

The present invention relates to a filter cloth frame for use in a disc filter according to the preamble of claims 1, 9 and 12.

### Background Art

There are various types of disc filters, which are described, for instance, in SE-C2-511 246 and SE-C2-526 692. These disc filters use disc-shaped filter members which comprise a plurality of separate disc-shaped filter sections, which together establish annular filter members which in turn are divided into a plurality of separate, detachable filter segments, each segment comprising at least one filter cloth and a filter cloth frame on which the cloth is stretched. This also means that the filter cloth is divided into smaller pieces, and therefore, in case of a local damage to the cloth, only the cloth on one of the filter sections has to be replaced by replacing one or more filter segments and the associated cloth, instead of replacing an entire annular disc. The filter cloth frames of the above disc filters can be made of stainless steel or prestressed glass fibre.

In the two disc filters described above, the filter cloth can be attached in one of several different ways. In a common solution, the filter cloth is glued directly to the filter frame on the frame sides facing away from each other. This is common when the cloth consists of a textile or plastic material.

Disc filter constructions of this type suffer from several problems. The filter cloth has a limited life in normal use and must be replaced at regular intervals. Moreover, the filter cloth is sensitive and can easily be damaged, necessitating a premature replacement of the filter cloth. Cloth glued to the filter cloth frame tends to be torn away from the filter cloth frame in operation, which also results in premature replacement of the filter cloth.

The above disc filters function in a satisfactory manner but suffer from problems regarding the separate, detachable filter segments with filter cloth and filter cloth frame, in particular when the filter cloth is what is referred to as a microfilter cloth. For instance while gluing the microfilter cloth to the frame, it is very important that the filter frames be as plane as possible, preferably perfectly plane, so that no folds or crimps or the like deteriorate the tightness of the glue joint due to poor engagement between the cloth and the frame when the filter cloth is prestressed before being joined/glued to the frames. This means that the prior art filter frames which are welded together of at least two substantially L-shaped, flat parts, when they are made of stainless steel which always more or less "warps" in welding, will not be perfectly plane with sufficiently exact dimensions. This increases the efforts of compensating for the poor engagement between the cloth and the frame since at least one additional step of pressing the cloth into good engagement with the frame must be performed, for example by applying a weight/force to the cloth in connection with gluing. The handling and manufacture of the separate parts of the filter frames also require further steps which necessitate more people and a higher consumption of material, inter alia in the form of waste material.

A further problem of manufacture regarding the filter frames made of stainless steel is that stainless steel is recognised to be very difficult to glue since glue hardly adheres to its surface. This means that filter frames made of stainless steel must be blasted to provide a surface to which glue can adhere, thus making manufacture more expensive. Blasting also results in the filter cloth frames being bent and getting warped during blasting with a further increase in cost in the form of extra work and consumption of material as well as handling.

Prior art filter cloth frames and their parts of stainless steel also usually have sharp edges and/or burr/flash after manufacture, which means that deburring has to be performed in yet another step.

Furthermore the stainless steel frames have a limited resistance to corrosion since they do not resist all corrosive environments, and therefore these components are demanded to have resistance to corrosion which is better and also governed by needs.

Prior art filter frames of glass fibre also suffer from problems since they are made of several parts, making assembly and gluing to the filter cloth complicated, thus requiring further steps. Prestressed glass fibre is expensive to produce, much the same as stainless steel, and therefore each glass fibre component will be expensive and make the disc filter significantly more expensive since several hundreds of glass fibre frames may be required in a disc filter. These glass fibre frames do not manage the same load as filter frames of stainless steel if the dimensions are the same and they also have approximately the same weight as filter frames of stainless steel since the glass fibre frames should have the same strength.

There is a need of improving such disc filters, by, for instance, making these disc filters lighter per unit of length, for instance by extending them by further disc-shaped filter members, so that loads on bearings and drives and also the weight of the disc filter do not increase, in any case not very much, when extending the disc filter, to increase the capacity of the disc filter, or making these disc filters lighter so that loads on bearings and drives are decreased, for instance due to a reduced weight per unit of length and/or less mass/lower movement of inertia to be rotated with maintained filtering capacity. It is also desirable to minimise the service requirements for disc filters and also to increase their life. It would also be desirable to make the manufacture of disc filters less costly.

### Summary of the Invention

An object of the present invention is to provide a filter cloth frame which enables a less expensive construction of a filter member for a disc filter.

A further object is to provide a filter cloth frame which can be manufactured at a lower cost. Yet another object is to provide a lighter filter cloth frame.

A further object is to provide a filter cloth frame for construction of a lighter disc filter.

Another object is to provide a filter cloth frame which is more resistant to corrosion and which can enable construction of a disc filter which is more resistant to corrosion. A special object is to provide a filter cloth frame having corrosion protection governed by needs.

Yet another object is to provide a filter cloth frame in a disc filter, the use of which is governed by the need for the desired corrosion protection.

A further object is to provide a filter cloth frame which is more dimensionally stable, planer and/or has more exact dimensions.

A still further object of the present invention is to provide a filter segment comprising a filter cloth and a filter cloth frame, allowing more reliable attachment of the filter cloth to the filter cloth frame.

Another object is to provide a filter segment comprising a filter cloth, a filter cloth frame and a seal extending along the outer edges of these parts, achieving a more reliable seal of the filter segment against the disc filter.

One more object of the present invention is to provide a disc filter which is more resistant to corrosion and therefore has a wider application.

Yet another object is to provide a disc filter which is lighter and therefore has a higher filtering capacity with an insignificantly increased weight.

A further object is to provide a disc filter which is manufactured at a lower cost.

Another object is to provide a disc filter which has a wider application since its use can be governed by the need for the desired corrosion protection and/or which requires less maintenance.

According to the invention, these objects are achieved by the filter cloth frame of the type stated by way of introduction being given the features that are defined in claim 1. Preferred embodiments will be evident from the dependent claims 2-8. The objects are also achieved by a filter segment according to claim 9, the preferred embodiments of which are defined in claims 10 and 11. Moreover the objects are achieved by a disc filter as claimed in claim 12.

The filter cloth frame according to the invention is made in one piece of cast light metal. In a preferred embodiment, the light metal consists of an aluminium alloy. This makes the filter cloth frame lighter, more dimensionally stable and/or more resistant to corrosion.

In another preferred embodiment, the filter cloth frame is finished, for instance anodised, such as bright anodised or hard anodised. In a further embodiment of the filter cloth frame, it is finished by chemical nickel plating, chromating, painting, varnishing, altizizing or a similar method. This improves the corrosion resistance of the filter cloth frame and provides corrosion resistance governed by needs.

In a further preferred embodiment, the filter cloth frame is made in one piece of sand-cast, chill-cast or die-cast light metal. In a preferred embodiment, the light metal consists of an aluminium alloy. This results in a lighter, less expensive and more corrosion resistant filter cloth frame.

Each filter segment according to the invention comprises a filter cloth frame of the above type and a filter cloth which is glued to the filter cloth frame with various types of glue. This results in a lighter, less expensive and more corrosion resistant filter segment and good engagement and adhesion between filter cloth and frame and also a good selection of suitable glues which make manufacture less vulnerable.

The disc filter according to the invention comprises a drum and at least one disc-shaped filter member which on the outside of the drum extends outwards in the transverse direction of the drum and consists of releaseably secured filter segments, each filter segment consisting of the above-mentioned filter segment. This means that a lighter, less expensive and/or more corrosion resistant disc filter with a minimised service requirement is provided.

### Brief Description of the Drawings

The present invention will now be described in more detail with reference to the accompanying drawings, in which
Fig. 1 is a perspective view which schematically illustrates the principle of a disc filter according to prior art,
Fig. 2 is an end view of a disc filter with certain concealed parts indicated by dashed lines,

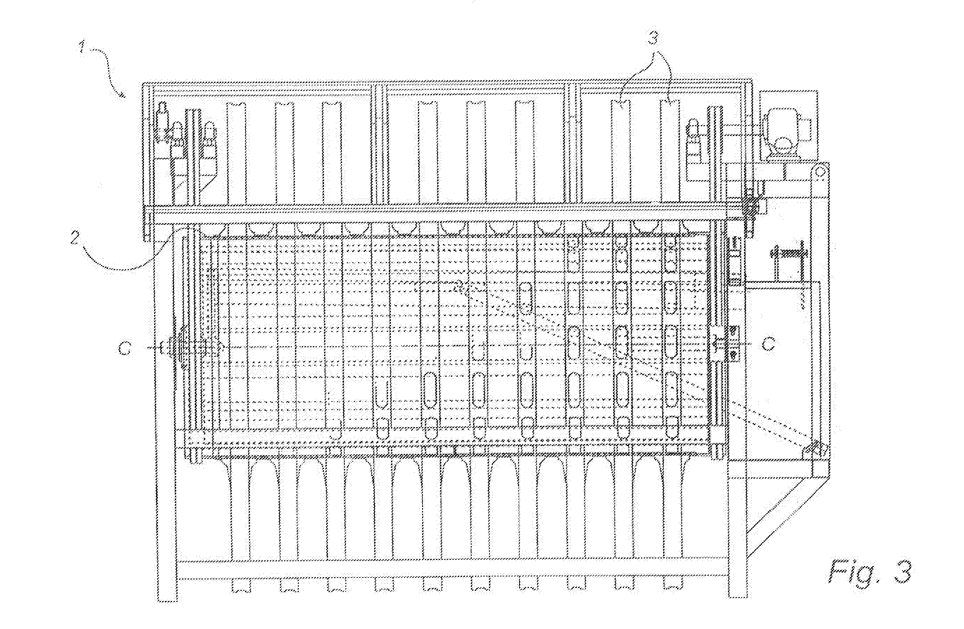

Fig. 3 is a side view of the disc filter in Fig. 2 with certain concealed parts indicated by dashed lines,
Fig. 4 is a perspective view of a module for construction of a filter support unit,
Fig. 5 is a perspective view of a closure means for securing filter segments to the inventive disc filter,
Fig. 6 is a top plan view of an inventive filter segment.

### Detailed Description of the Invention

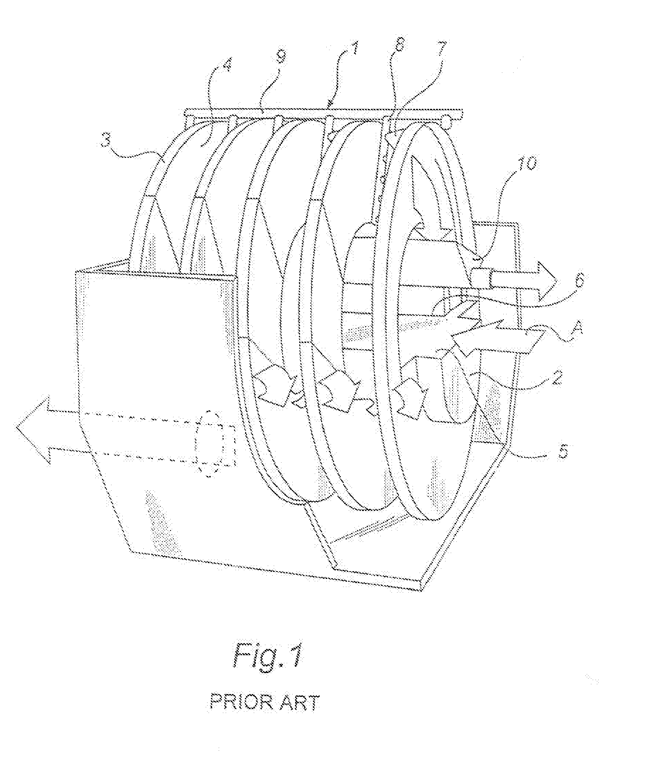

The principal function of a disc filter 1 according to the invention is largely the same as for prior art disc filters of the type shown in Fig. 1. The function of the inventive disc filter will therefore be explained with reference to Fig. 1. The disc filter 1 has a slowly rotating drum 2 which supports a number of disc-shaped filter members 3, whose normal direction is parallel and concentric with the longitudinal axis or rotational axis C of the drum 2 and which on their side faces, which are axially directed and radially extended, support a filter cloth 4. The liquid A which is to be filtered is passed through an inlet 5 to the interior of the drum 2. From the interior of the drum 2, the liquid A is passed on through openings in the circumferential surface 6 of the drum 2 to the interior of the disc-shaped filter members 3. From there the liquid A is finally discharged in a filtering direction through the filter cloth 4. Any particles in the liquid A adhere to the inside of the filter cloth 4. For cleaning of the filter cloth 4, the disc filter 1 is provided with flushing nozzles 7 which are mounted on a number of flushing tubes 8 which conduct flushing liquid to the flushing nozzles 7 and are connected to an elongate liquid-conducting tube 9 which extends parallel to the centre axis C. The flushing nozzles flush the filter cloth axially from the outside and flushed-away particles are collected in a discharge chute 10 arranged inside the drum 2 in the upper portion thereof.

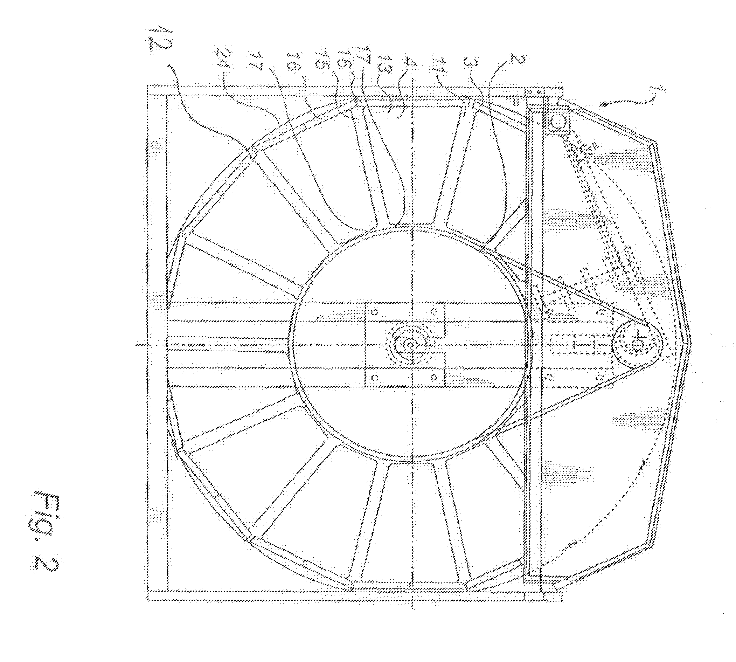

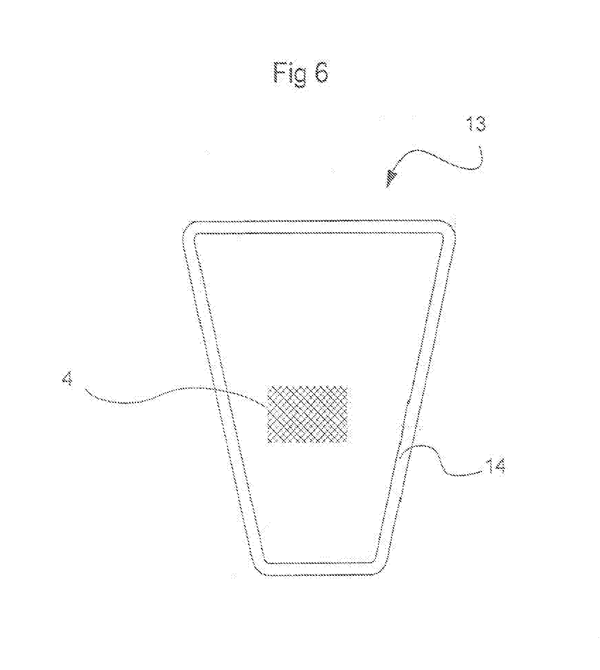

As is evident from Fig. 2, the filter members 3 have a filter support unit 11 made up of a plurality of modules 12. The filter support unit 11 forms compartments in which filter segments 13 are placed. Each filter segment consists of, see Fig. 6, a filter cloth frame 14 which holds the filter cloth 4.

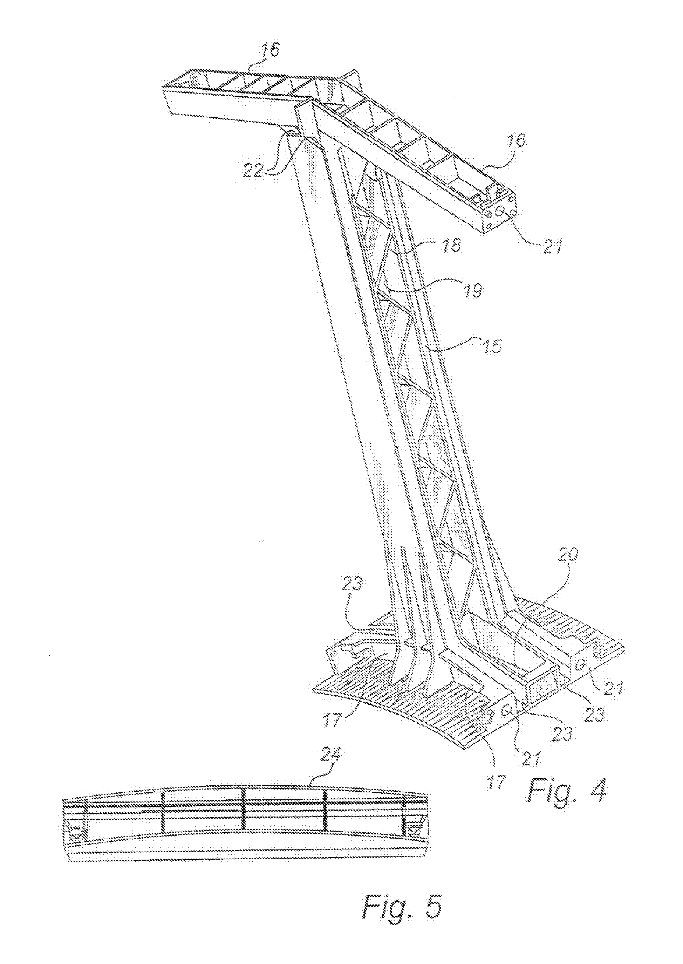

As shown in Fig. 4, the modules 12 have an intermediate support unit portion 15 from which at one end two outer support unit portions 16 extend outwards. From the other end of the intermediate support unit portion 15 extend two inner support unit portions 17 outwards. The intermediate support unit portion 15 consists of a framework construction 18 with cavities 19. In the inner support body portions 17 there are openings 20 to be passed by the liquid A. The inner and outer support unit portions 17, 16 have at their ends holes 21 for screws for connecting two modules 12 to each other. On each side of the intermediate support unit portion 15 there are two grooves 22, which extend parallel to the intermediate support unit portion 15 in the plane of the filter support unit 11. In each of the inner support unit portions 17 there are two parallel grooves 23, which are parallel to the inner support unit portion 17 and extend in the plane of the filter support unit 11.

Fig. 5 shows a closure means in the form of a lid 24 for securing the filter segments 13 to the filter support unit 11.

When building the disc filter 1, seven modules 12 are attached to each other by means of screws in the holes 21, so that the modules form a semicircle. Two such semicircles are then mounted on the drum 2 and bolted to each other to form a filter support unit 11. The modules 12 are joined essentially in the centre of the filter segments 13.

In each of the compartments formed by the filter support unit 11 between two neighbouring modules 12, a filter segment 13 is inserted into the grooves 22 and 23 on opposite sides of the modules 12. The lid 24 is slipped on to the outer support unit portions 16 of two neighbouring modules 12 and the two parallel filter segments 13 which are enclosed by these modules 12 together. The lid 24 is screwed into the outer support unit portions 16 of the modules 12. A number of thus built-up disc-shaped filter members 3 are mounted on the drum 2 to provide the disc filter 1. In the shown embodiment, ten filter members 3 are mounted on the drum 2. Further filter members 3 can be arranged on the drum 2 to provide a disc filter of greater capacity.

The disc filter 1 according to the invention is provided by the inventive filter cloth frame 14 being made in one piece of cast light metal. This means that each filter cloth frame has a low weight, lower than prior art filter cloth frames of stainless steel and prestressed glass fibre, thus allowing longer disc filters 1, without problems with fatigue of the material of the drum 2. The low weight also reduces the load exerted on the mounting and drive of the drum and enables extension of the disc filter without significantly increasing its weight, thus easily allowing its filtering capacity to be increased. This saving of weight is extremely important since the filter cloth frames 14 in a disc filter can amount to several hundreds and frames having a lower weight considerably reduce the total weight of the disc filter 1.

Casting of the filter cloth frame 14 in one piece also results in a better product by allowing it to be produced with very exact dimensions and perfectly plane, which is basically impossible when using stainless steel. A compression-moulded cast component is also more dimensionally stable than an equivalent component of stainless steel and the blasting of stainless steel which is necessary for a durable glued joint can be eliminated, that is blasting of the stainless steel releases stress in the steel so that the stainless steel frame warps, which must be taken into consideration when dimensioning a completed prior art stainless steel frame.

Nor does the manufacture of the filter cloth frames 14 according to the invention require joint preparation and welding together of several parts like in the prior art frames made of stainless steel, thus making manufacture less expensive. The casting mould can also be adjusted in design with respect to radii, clearance etc, so that the completed filter cloth frame 14 will be easier to handle by burr and flash and also sharp edges on the frame being completely eliminated, thus fully excluding the risk of cuts when handling the frame 14 and also fully eliminating the need for deburring.

The filter cloth frame 14 according to the invention is made in one piece by sand casting, chill casting or die casting, which means that various well-tried casting methods can be applied, which makes the manufacture of the frame less expensive.

The inventive filter cloth frame 14 is, as already mentioned, made in one piece of cast light metal, which preferably is an aluminium alloy. This means that the filter cloth frame 14 according to the invention is also given good corrosion protection in addition to the above advantages since aluminium naturally has good resistance to corrosion.

In a further embodiment of the invention, the filter cloth frame 14 is finished so that its corrosion resistance is further improved and a surface is obtained, which gives better adhesion of glue when the filter cloth 4 is glued to it.

In another embodiment of the invention, the filter cloth frame 14 of aluminium is anodised, for instance bright anodised or hard anodised, for the purpose of additionally improving its corrosion resistance and also increasing its resistance to wear, especially on its surface, if desirable.

In yet another embodiment of the invention, the filter cloth frame 14 is finished by chemical nickel plating, chromating, painting, varnishing, altizizing or a similar method.

These different types of finishing of the filter cloth frame 14 according to the invention imply that a certain finishing can be selected according to the need for corrosion protection that is required in a certain application of the disc filter 1, that is a corrosion protection governed by needs, when filtering in different types of corrosive environments; for instance, a different type of finishing may be required/selected in filtering of salt water instead of the finishing that is required/selected in filtering of fresh water etc.

All in all, this means that the corrosion protection of the filter cloth frame 14 according to the invention is obtained with a less expensive and lighter material, compared with stainless steel materials.

By manufacturing a filter cloth frame 14 according to the invention, an inventive filter segment 13 is provided for building a disc filter 1 which comprises the filter cloth 4 glued to the filter cloth frame 14 with glue of different types that are suitable for aluminium. Such a filter segment 13 is lighter, more resistant to corrosion, less expensive and provides a more durable and better attachment of the filter cloth to the frame, inter alia by a large number of glue types being usable instead of in principle only a few glues such as for prior art stainless steel frames and by the glue better adhering to the frame 14 and also by the filter cloth better engaging the frame in contrast to frames of stainless steel which are admittedly difficult to glue and get warped after blasting and welding before gluing and thus do not allow satisfactory adhesion of the glue.

In one embodiment of the invention, a filter segment 13 is extremely advantageous when the filter cloth 4 is a microfilter cloth, preferably a polyester or nylon cloth or a cloth of stainless steel, since this type of cloth places high demands on the flatness of the filter cloth frame for good engagement and also on the surface of the frame for good adhesion of the glue since the cloth 4 is usually mounted on the frame by applying a certain amount of force in connection with gluing.

In another embodiment of the invention, the filter segment 13 also comprises at least one detachable seal extending along the circumference of the filter cloth frame 14 and the filter cloth 4, for instance in the form of a rubber strip, such as EPDM rubber, whose outside can also be flocked to reduce friction when inserting and removing the filter segments 13.

The disc filter 1 according to the invention which comprises filter segments 13 with filter cloth frames 14 defined as described above thus is lighter, less expensive to manufacture and has corrosion protection governed by needs, resulting in a wider field of application and a minimised service requirement.

## Claims

1. A filter cloth frame (14) for use in a disc filter (1), **characterised in that** the filter cloth frame (14) is made in one piece of cast light metal.

2. A filter cloth frame (14) as claimed in claim 1, in which the light metal is an aluminium alloy.

3. A filter cloth frame (14) as claimed in claim 1 or 2, which is finished.

4. A filter cloth frame (14) as claimed in claim 2, which is anodised.

5. A filter cloth frame (14) as claimed in any one of claims 1-3, which is finished by chemical nickel plating, chromating, painting, varnishing, altizizing or a similar finishing method.

6. A filter cloth frame (14) as claimed in claim 4, which is bright anodised or hard anodised.

7. A filter cloth frame (14) as claimed in claim 1, which is made in one piece of sand-cast, chill-cast, or die-cast light metal.

8. A filter cloth frame (14) as claimed in any one of claims 2-8, which is made in one piece of a sand-cast, chill-cast or die-cast aluminium alloy.

9. A filter segment (13) for use in a disc filter (1), **characterised in that** each filter segment (13) comprises a filter cloth frame (14) as claimed in any one of the preceding claims, and a filter cloth (4) which is glued to the filter cloth frame (14).

10. A filter segment (13) as claimed in claim 9, wherein the filter cloth (4) is a microfilter cloth, preferably a polyester or nylon cloth or a cloth of stainless steel.

11. A filter segment (13) as claimed in claim 9 or 10, which further comprises at least one detachable seal extending along the circumference of the filter cloth frame (14) and the filter cloth (4).

12. A disc filter (1) comprising a drum (2) which has a central longitudinal axis (C) and which is rotatably arranged around the same and is adapted to receive a liquid (A) which is to be filtered, and at least one disc-shaped filter member (3) which on the outside of the drum extends outwards in the transverse direction of the drum (2) and consists of releasably secured filter segments (13), **characterised in that** each filter segment (13) is defined by the features as claimed in any one of claims 9-11.
